Europäisches Patentamt

European Patent Office

Office européen des brevets

(11) Veröffentlichungsnummer: **0 453 742 A1**

# (12) EUROPÄISCHE PATENTANMELDUNG

(21) Anmeldenummer: 91103523.6

(22) Anmeldetag: 07.03.91

(51) Int. Cl.5: **A01C 7/04**

(30) Priorität: 25.04.90 HU 255390

(43) Veröffentlichungstag der Anmeldung:
30.10.91 Patentblatt 91/44

(84) Benannte Vertragsstaaten:
AT DE ES FR GB IT

(71) Anmelder: KÜHNE MEZÖGAZDASAGI
GEPGYAR
Marcius 21. tér 2.
H-9201 Mosonmagyarovar(HU)

(72) Erfinder: Vései Lázl
Fyazekas Mihály u. 24
H-9200 Mosonmagyar vár(HU)
Erfinder: Szombath, Imre

Kinizsi u. 4
H-9228 Halászi(HU)
Erfinder: Schmirer, Jenö
Kormos ltp. 12
H-9200 Mosonmagyar vár(HU)
Erfinder: Pczik, Gyula
Kossuth Lajos u. 169
H-9200 Mosonmagyar vár(HU)
Erfinder: Wachler, Jans
Magyar u. 19
H-9200 Mosonmagyar vár(HU)

(74) Vertreter: Patentanwälte Viering & Jentschura
Steinsdorfstrasse 6 Postfach 22 14 43
W-8000 München 22(DE)

(54) Säapparat.

(57) Säapparat, der ein Zuteilergehäuse (1), ein im
Zuteilergehäuse drehbar gelagertes Zellenrad (3)
und eine an diesem befestigte, mit Bohrungen (13)
versehene, unter Unterdruck setzbare Säscheibe (2)
sowie eine unter dem Zellenrad angeordnete, von
Drillscharen (11) begrenzte Saatgutleitvorrichtung
aufweist. Es ist ein die an den Bohrungen (13) der
Säscheibe (3) mittels Unterdruck gehaltenen Saatkörner von der Säscheibe (3) in die Zellen (14) des
Zellenrades (2) abstreifendes exzentrisches Leitstück
(7) vorgesehen, in den aufeinander folgenden Zellen
(14) des Zellenrades (2) sind die in der unteren
Stellung der Zelle abzustoßenden Saatkörner abwechselnd auf die entgegengesetzte Seite zwingende Leitelemente, vorzugsweise Keile (8), angeordnet
und die von Drillscharen (11) begrenzte Saatgutleitvorrichtung (10) ist als Zwillings-Saatgutleitvorrichtung ausgeführt, deren zueinander parallelen Einzelvorrichtungen mittels einer Saatgutleitplatte (9) voneinander getrennt sind.

Fig.1

Die Erfindung bezieht sich auf einen Sähapparat, der ein Zuteilergehäuse, ein im Zuteilergehäuse drehbar gelagertes Zellenrad und eine an diesem befestigte, mit Bohrungen versehene, unter Unterdruck setzbare Säscheibe sowie eine unter dem Zellenrad angeordnete, von Drillscharen begrenzte Saatgutleitvorrichtung aufweist.

Bekanntlich stellt die Zuführung des Saatgutes in den Boden eine Phase von entscheidender Bedeutung im Pflanzenanbau dar, weil dadurch die Qualität und Quantität des Ertrages in großem Maße beeinflußt wird. Aus diesem Grunde pflegt man Saatpläne zu erstellen, die die räumliche Verteilung des Saatgutes im Boden bestimmen.

Die in der Praxis verbreiteten pneumatischen Drillmaschinen verwirklichen die Technologie der Reihensaat auf die Weise, daß der Abstand zwischen den nacheinander gesäten Körnern eingestellt wird. Die als theoretische Möglichkeit zur Verfügung stehende Reihensaat versuchte man in den landwirtschaftlichen Großbetrieben bisher mit der Methode der Kreuzdrillsaat bzw. der Streifensaat zu kombinieren bzw. dadurch zu ersetzen.

Die Technologie der Reihensaat wird bis jetzt in einem breiten Maße angewandt, obwohl die dadurch erreichbaren Erträge weit hinter dem theoretischen Optimum zurückbleiben.

Bekanntlich ist die optimale Anbaufläche von Pflanzenkulturen quadratisch und dies kann durch die bisher bekannten Sämechanismen nicht sichergestellt werden.

Diesen Nachteil zu beseitigen versuchte man mit der Zwillingsreihen-Drillmaschine, die durch die mechanische Verkopplung von zwei Säeinheiten je Saatreihe erreicht wird. Nachteile dieser Ausführungsform sind infolge der mechanischen Verkopplung der beiden Säeinheiten eine ungenaue Saatgutverteilung und hohe Kosten der Maschine.

Ziel der Erfindung ist die Entwicklung eines Säapparates, der eine optimale räumliche Verteilung des Saatgutes im Boden gewährleistet und die Bildung schädlicher Saatkorngruppierungen im Boden verhindert.

Die Erfindung beruht insbesondere auf der Erkenntnis, daß vorgenanntes Ziel erreicht werden kann, wenn die Saatkörner in zwei Reihen, jedoch in entsprechenden Abständen abwechselnd in den Boden geführt werden. Durch den erfindungsgemäßen Säapparat wird das gestellte Ziel dadurch sichergestellt, daß der Säapparat ein die mittels Unterdruck an den Bohrungen der Säscheibe gehaltenen Saatkörner von der Säscheibe in die Zellen des Zellenrades abstreifenden exzentrisches Leitstück aufweist, in den aufeinanderfolgenden Zellen des Zellenrades die in der unteren Stellung der Zelle abzustoßenden Saatkörner abwechselnd auf die entgegengesetzte Seite zwingende Leitelemente, vorzugsweise Leitkeile, angeordnet sind und die von den Drillscharen begrenzte Saatgutleit-Vorrichtung als Zwillings-Saatgutleitvorrichtung ausgebildet ist, deren zueinander parallelen Einzelvorrichtungen mittels einer Saatgutleitplatte voneinander getrennt sind.

Der erfindungsgemäße Säapparat gewährleistet, daß die Saatkörner in zwei Reihen in bestimmten Abständen voneinander in den Boden gelangen und so für jedes Saatkorn die optimale Anbaufläche zur Verfügung steht.

Die die Saatkörner haltenden Bohrungen in der Säscheibe sind in einer mit denen der Zellen des Zellenrades übereinstimmenden Anzahl und Teilung ausgebildet.

Beide Seiten der Zwillings-Saatgutleitvorrichtung sind jeweils mit einer Drillscharspitze versehen, die im Interesse der optimalen Anpassung an die verschiedenen Samenarten auswechselbar angeordnet sein können.

Der erfindungsgemäße Säapparat verwirklicht die Saatgutverteilung und die Saatgutzuleitung zur Drillschar innerhalb einer Einheit, sodaß seine Investitionskosten wesentlich niedriger als die der bekannten, dennoch aber das optimale Ergebnis nicht gewährleistenden Einrichtungen sind.

Die Erfindung wird detailliert anhand eines Ausführungsbeispiels aufgrund der Zeichnung beschrieben, wobei

Fig. 1 den schematischen Querschnitt des erfindungsgemäßen Säapparates darstellt, wohingegen

Fig. 2 die schematische Seitenansicht des zum Teil im Schnitt gezeigten Säapparates nach Fig. 1 darstellt.

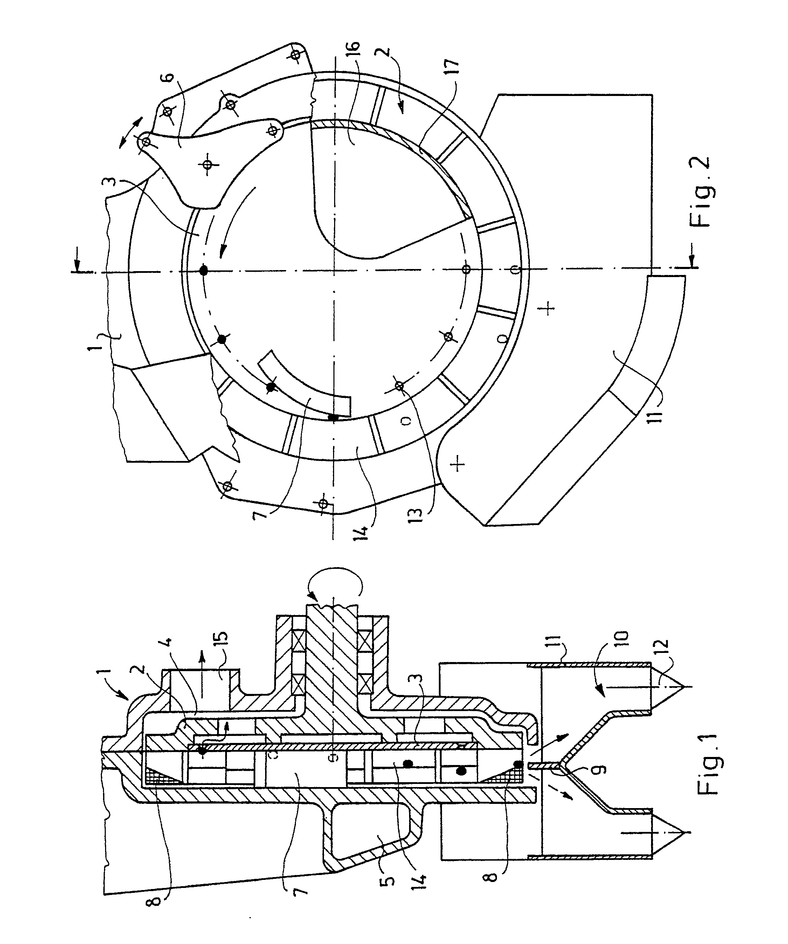

Der erfindungsgemäße Säapparat weist ein an den nicht dargestellten Saatgutbehälter angeschlossenes, aus zwei Hälften bestehendes Zuteilergehäuse 1 auf. Im Zuteilergehäuse 1 ist eine mit in gleichen Abständen im Kreis angeordneten Bohrungen 13 versehene Säscheibe 3 drehbar gelagert. An dem Zuteilergehäuse 1 ist an der einen Seite der Säscheibe 3, rechts in Fig. 1, ein an den den Unterdruck bewirkenden nicht dargestellten Ventilator anschließbarer Stutzen 15 vorgesehen. An der anderen Seite der Säscheibe 3 ist das als Ring ausgebildete Zellenrad 2 befestigt. Anzahl und Teilung der am Zellenrad 2 befindlichen Zellen 4 stimmt mit der Teilung und Anzahl der Bohrungen 13 der Säscheibe überein, d.h. gegenüber jeder Bohrung ist eine dieser gegenüber offene Zelle 14 angeordnet. In der der Säscheibe 3 gegenüberliegenden Hälfte des Zuteilergehäuses 1 ist ein an den nicht dargestellten Saatgutbehälter angeschlossener Kanal 5 ausgebildet, der durch den in Fig. 2 sichtbaren Durchbruch 16 mit dem vor der Säscheibe 3 befindlichen und dem innerhalb des Zellenrades 2 befindlichen Raum in Verbindung steht und das Saatgut in diesen Raum leitet. An der dem Zellenrad 2 zugewandten Seite des Zuteilergehäuses 1 ist unten ein die Zellen abschließendes, entlang eines Kreisbogens verlaufendes Wandungsteil 17 vorgesehen, um zu verhindern, daß das Saatgut in die jeweils unten befindlichen Zellen fällt.

An der dem Zellenrad zugewandten Innenwand des Zuteilergehäuses 1 sind in Höhe von etwa 9 - 11 Uhr ein exzentrisches Leitstück 7 sowie über dem Durchbruch 16 ein Saatgut-Abstreifer 6 angeordnet.

Im Sinne der Erfindung sind in den Zellen 14 in Richtung des Umfanges abwechselnd in entgegengesetzte Richtungen zeigende Leitkeile 8 angeordnet. Unter dem Zuteilergehäuse 1 ist eine von den Drillscharen 11 begrenzte Zwillings-Saatgutleitvorrichtung 10 angeordnet, deren Einzelvorrichtungen mittels der Saatgutleitplatte 9 voneinander getrennt sind. Die Saatgutleitplatte 9 und die in den Zellen 14 angeordneten Leitkeile 8 stellen gemeinsam sicher, daß das Saatgut aus dem Zellenrad abwechselnd in die eine bzw. die andere Seite der Saatgutleitvorrichtung gelangen. Die Saatgutleitvorrichtung 10 ist mit zwei an die Drillscharen 11 angeschlossenen Drillscharspitzen 12 versehen.

Die Arbeitsweise des erfindungsgemäßen Säapparates ist folgende: Die an sich bekannten Operationschritte wie z.B. das Furchenherziehen werden nicht beschrieben. Aus dem nicht dargestellten Saatgutbehälter gelangt das Saatgut durch den Kanal 5 (Fig. 1) sowie den Durchbruch 16 (Fig. 2) zur Säscheibe 3. Sofern in dem Raum hinter der Säscheibe 3 ein Unterdruck vorherrscht, wird von dem Saatgut je ein Saatkorn auf die Bohrungen 13 der Säscheibe 3 gepreßt. Die auf der Säscheibe übrigens eventuell haftenden überflüssigen Saatkörner werden mittels des Saatgutabstreifers abgestreift. Die auf der umlaufenden Säscheibe infolge des Unterdrucks haftenden Saatkörner werden dann einzeln von dem exzentrischen Leitstück 7 in die Zellen 14 des Zellenrades 2 gezwungen. Die die Saatkörner enthaltenden und sich nach unten bewegenden Zellen lassen dann in ihrer unteren Stellung in Abhängigkeit von der Stellung des in ihnen angeordneten Leitkeiles 8 die Saatkörner mit Hilfe der Saatgutleitplatte 9 abwechselnd in die rechte und linke Hälfte der Saatgutleitvorrichtung fallen. Aus den Hälften der Saatgutleitvorrichtung 10 gelangen dann die Saatkörner durch die Drillscharspitzen 12 hindurch in der gewünschten Teilung in die rechte bzw. linke Furche.

Die Drillscharspitzen 12 können, um sie den verschiedenen Sämereien anzupassen, ausgewechselt werden. Vor der Saatgutleitvorrichtung 10 bzw. den Drillscharen 11 arbeitet eine der Breite der Zwillingsreihe entsprechende Breite aufweisende Öffnerschar, die in einer geringeren Tiefe als die Drillscharen der Saatgutleitvorrichtung arbeitet.

Diese Öffnerschar entfernt in ihrer Arbeitsbreite die obere Erdschicht und gewährleistet so, daß die sich zwischen den Drillscharen 11 anhäufende Erdmenge ungehindert unter der Saatleitvorrichtung verbleiben kann.

Der erfindungsgemäße Säapparat stellt, wie dies auch aus dem Ausführungsbeispiel hervorgeht, mit sehr einfachen technischen Mitteln das Aussäen der Saatkörner in zwei Reihen und in entsprechenden Abständen gegeneinander versetzt sicher.

**Patentansprüche**

1. Säapparat, der ein Zuteilergehäuse (1), im Zuteilergehäuse ein drehbar gelagertes Zellenrad (2) und eine an diesem befestigte, mit Bohrungen (13) versehene und unter Unterdruck setzbare Säscheibe (3) sowie eine unter dem Zellenrad angeordnete, von Drillscharen (11) begrenzte Saatgutleitvorrichtung (10) aufweist, dadurch gekennzeichnet, daß ein die an den Bohrungen (13) der Säscheibe (3) mittels Unterdruck festgehaltenen Saatkörner von der Säscheibe (3) in die Zellen (14) des Zellenrades (2) streifendes exzentrisches Leitstück (7) vorgesehen ist, in den aufeinander folgenden Zellen (14) des Zellenrades (2) in der unteren Stellung der Zelle abzustoßenden Saatkörner abwechselnd auf die entgegengesetzte Seite zwingende Leitelemente, vorzugsweise Keile (8), angeordnet sind und die von den Drillscharen (11) begrenzte Saatgutleitvorrichtung (10) als Zwillings-Saatgutleitvorrichtung ausgeführt ist, deren zueinander parallelen Einzelvorrichtungen mittels einer Saatgutleitplatte (9) voneinander getrennt sind.

2. Säapparat nach Anspruch 1, dadurch gekennzeichnet, daß die die Saatkörner haltenden Bohrungen (13) in der Säscheibe (3) in einer mit denen der Zellen (14) des Zellenrades (2) übereinstimmenden Anzahl und Teilung angeordnet sind.

3. Säapparat nach Anspruch 1 oder 2, dadurch gekennzeichnet, daß beide Seiten der Zwillings-Saatgutleitvorrichtung (10) mit je einer Drillscharspitze (12) versehen sind.

4. Säapparat nach Anspruch 3, dadurch gekennzeichnet, daß die Drillscharspitzen (12) auswechselbar angeordnet sind.

Fig. 2

Fig. 1

**Europäisches Patentamt**

**EUROPÄISCHER RECHERCHENBERICHT**

Nummer der Anmeldung

**EP 91 10 3523**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 591 848 (KLEINE)<br>* Seite 2, Spalte 25 - Seite 3; Abbildungen 1-5 * | 1,2 | A 01 C 7/04 |
| A | FR-A-2 414 288 (BENAC)<br>* Seite 3 - Seite 5; Abbildungen 1-4 * | 1,2 | |
| A | US-A-4 285 444 (TYE) | | |
| A | US-A-3 923 206 (GILLIES) | | |

RECHERCHIERTE SACHGEBIETE (Int. Cl.5)

A 01 C

Der vorliegende Recherchenbericht wurde für alle Patentansprüche erstellt

| Recherchenort | Abschlußdatum der Recherche | Prüfer |
|---|---|---|
| Den Haag | 15 Juli 91 | VERMANDER R.H. |